(19) Europäisches Patentamt
European Patent Office
Office européen des brevets

(11) EP 4 177 301 B1

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **21206267.3**

(22) Anmeldetag: **03.11.2021**

(51) Internationale Patentklassifikation (IPC):
***C07F 9/6581*** *(2006.01)* ***C07F 9/6593*** *(2006.01)*
***C08G 79/025*** *(2016.01)* ***C09K 21/12*** *(2006.01)*
***C08L 69/00*** *(2006.01)*

(52) Gemeinsame Patentklassifikation (CPC):
(C-Sets verfügbar)
**C07F 9/65815; C07F 9/65817; C07F 9/65818; C08G 79/025; C08L 69/00; C09K 21/12** (Forts.)

(54) **POLYPHOSPHAZEN UND FORMMASSE ENTHALTEND DAS POLYPHOSPHAZEN**
POLYPHOSPHAZENE AND MOULDING COMPOSITION CONTAINING SAME
POLYPHOSPHAZÈNE ET MATIÈRE DE MOULAGE CONTENANT DU POLYPHOSPHAZÈNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.05.2023 Patentblatt 2023/19**

(73) Patentinhaber: **Covestro Deutschland AG**
**51373 Leverkusen (DE)**

(72) Erfinder:
- **Yogendra, Sivathmeehan**
  **51373 Leverkusen (DE)**
- **Taschner, Vera**
  **51373 Leverkusen (DE)**
- **Hobeika, Sven**
  **51373 Leverkusen (DE)**
- **Deniz, Ayse**
  **Neuss (DE)**
- **Pich, Andrij**
  **Herzogenrath (DE)**
- **Buschmann, Sven**
  **Aachen (DE)**
- **Hetjens, Laura**
  **Aachen (DE)**

(74) Vertreter: **Levpat**
**c/o Covestro AG**
**Gebäude K12**
**51365 Leverkusen (DE)**

(56) Entgegenhaltungen:
**WO-A1-2021/043654** **DE-A1- 2 348 950**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 69/00, C08L 85/02**

## Beschreibung

Die vorliegende Erfindung betrifft ein Polyphosphazen, ein Verfahren zur Herstellung des Polyphosphazens, eine Formmasse enthaltend das Polyphosphazen und mindestens ein thermoplastisches Polymer sowie Formkörper enthaltend die Formmasse.

Thermoplastische Polymere werden für eine Vielzahl von Anwendungen zu Formkörpern verarbeitet, beispielsweise für den Automobilbereich, für den Bausektor, für Haushaltsgeräte und für den Bereich Elektro/Elektronik. Die Auswahl des jeweiligen Polymers oder auch der Polymermischung von mehreren Polymeren (Polymerblend) richtet sich nach den konkreten Anforderungen der jeweiligen Anwendung hinsichtlich mechanischer, rheologischer und thermischer Eigenschaften.

Viele dieser Anwendungen wie etwa Elektroartikel erfordern zusätzlich eine gewisse Flammwidrigkeit der Formkörper. Dazu gibt es eine Vielzahl von Flammschutzmitteln, die der thermoplastischen Formmasse zugegeben werden können. Diese Flammschutzmittel können halogenhaltig oder halogenfrei sein, wobei unter anderem aus regulatorischen Gründen seit einigen Jahren bevorzugt halogenfreie Flammschutzmittel zum Einsatz kommen.

Unter den halogenfreien Flammschutzmitteln sind die organischen Phosphorverbindungen wie etwa Oligophosphate eine häufig eingesetzte Gruppe. Damit lassen sich gute Flammschutzwirkungen erzielen und die Kosten dieser Flammschutzmittel sind für viele Anwendungen auch akzeptabel. Allerdings handelt es sich bei Oligophosphaten meist um Flüssigkeiten, wodurch manchmal eine Migration der Phosphorverbindung an die Bauteiloberfläche verbunden mit ästhetischen Defekten auftritt. Außerdem führen die flüssigen Oligophosphate zu einer deutlichen Erniedrigung der Wärmeformbeständigkeit der Formkörper. Eine Erweichung bei relativ niedrigen Temperaturen bedeutet für manche Anwendungen eine nicht mehr tolerierbare Einschränkung. Weiterhin führen die Oligophosphate zu einer Verschlechterung der mechanischen Eigenschaften.

Eine weitere Klasse von phosphorbasierten Flammschutzmitteln sind Phosphazene. Sie führen zu einer geringeren Reduzierung der thermischen Eigenschaften. Besonders für Polymere mit hoher Wärmeformbeständigkeit, wie etwa Polycarbonat, wird der Einsatz von Phosphazenen vielfach beschrieben.

WO 2014/018672 A1 offenbart eine flammgeschützte Zusammensetzung enthaltend Polycarbonat, halogenfreien Bisphosphat-Ester, Talk, Polytetrafluorethylen und optional ein Polyphosphazen. Die Zusammensetzung erreicht eine UL 94 V-0 Klassifizierung bei einer Dicke von weniger als einem Millimeter.

WO 2013/175448 A1 offenbart eine flammgeschützte Zusammensetzung enthaltend Polycarbonat, Polyester, ein Polysiloxan-Polycarbonat Copolymer und ein Phosphazen. Die Zusammensetzung zeichnet sich durch gute Schlagzähigkeit und Flammwidrigkeit aus.

JP 2002302598 A offenbart eine Zusammensetzung enthaltend 70-99 Gew.-% aromatisches Polycarbonat mit einer bestimmten Menge terminaler Hydroxylgruppen und 1-30 Gew.-% eines vernetzten Phosphazens. Die Zusammensetzung zeichnet sich durch eine gute Schlagzähigkeit und Hydrolysebeständigkeit aus.

US 2012/0301766 A1 offenbart eine Zusammensetzung mit guter Flammwidrigkeit, Schlagzähigkeit und Farbechtheit. Die Zusammensetzung enthält Polycarbonat, Flammschutzmittel, Fluorpolymer, Pfropfcopolymer mit einem Schwefelgehalt von 100 bis 1500 ppm. Das Flammschutzmittel kann ein Phosphazen sein.

EP 1444297 A1 offenbart eine flammhemmende thermoplastische Polycarbonatzusammensetzung, die ein Polycarbonatharz, ein mit Kautschuk modifiziertes, mit Vinyl gepfropftes Copolymer, eine Phosphormischung aus einer cyclischen Phosphazenoligomerverbindung und einen Phosphorsäureester als Flammschutzmittel und ein fluoriertes Polyolefinharz umfasst.

DE 23 48 950 A1 offenbart polymere Phosphazene und ihren Einsatz als Flammschutzmittel von Textilgut sowie ein Verfahren zum Entfärben der Phosphazene durch Behandlung mit Ozon.

US 2004/0039134 A1 offenbart eine Phosphazenzusammensetzung, die einen Gehalt an flüchtigen Komponenten von nicht weniger als 0,02 Gew.-% und nicht mehr als 1,0 Gew.-% aufweist, wenn sie 2 Stunden auf 200 °C erhitzt wird. Die Phosphazenzusammensetzung zeichnet sich durch eine gute Hydrolysebeständigkeit aus und wenn sie einem Harz zugesetzt wird, wird eine Harzzusammensetzung bereitgestellt, die ein gutes Gleichgewicht zwischen Hydrolysebeständigkeit, Flammverzögerung und Stabilität der elektrischen Eigenschaften aufweist.

Bei den konkret eingesetzten Phosphazenen handelt es sich meist um cyclische Verbindungen mit vorwiegend drei P=N Einheiten, also um 6-Ringe, die am Phosphor Phenylsubstituenten tragen.

Weiterhin gibt es Offenbarungen, in denen Phosphazene beschrieben werden, bei denen zumindest zwei Phosphazenringe verbunden sind.

EP 1104766 A1 und US 6596893 B2 offenbaren ein halogenfreies Flammschutzmittel mit hohem Schmelzpunkt und geringer Volatilität, das die inhärenten Eigenschaften des Harzes nicht negativ beeinflusst. Bei dem Flammschutzmittel handelt es sich um ein vernetztes Phenoxyphosphazen, das durch Vernetzung eines Phosphazens mit Vernetzungsgruppen wie beispielsweise einem mehrwertigen Phenol oder einem Bisphenol erhalten wird. Das vernetzte Phosphazen hat keine freien Hydroxylgruppen und einen bestimmten Anteil an Phenylgruppen. Die beiden Offenbarungen beschreiben auch ein Verhältnis von eingesetztem Phenol zu eingesetzter Vernetzungsgruppe. Es wird jeweils ein

deutlicher Überschuss an Phenol eingesetzt, um eine zu starke Vernetzung zu vermeiden.

CN 1026755591 A offenbart ein schleifenlinienförmiges Phosphazenepoxidharz und ein Syntheseverfahren dazu. In der Hauptkette des Epoxidharzes sind cyclische Phosphazenstrukturen enthalten. Nachdem das schleifenlinienförmige Phosphazenepoxidharz und ein Härter ausgehärtet sind, weist das erhaltene duroplastische Harz eine gute Wärmebeständigkeit, thermische Stabilität und Feuerbeständigkeit auf.

Die in der Literatur beschriebenen Phosphazenverbindungen führen trotz der beschriebenen Verbesserungen gegenüber beispielsweise Oligophosphaten immer noch zu einer merklichen Verschlechterung der Wärmeformbeständigkeit der Polymermatrix, was sich beispielweise in reduzierten Vicat-Temperaturen oder Glasübergangstemperaturen bemerkbar macht.

WO 2021/042654 offenbart ein Polyphosphazen hergestellt durch Umsetzung eines cyclisches Phosphazens zunächst mit Phenol und anschließend mit einem aromatischen Diphenol. Durch Einsatz dieses Polyphosphazens in einer thermoplastischen Formmasse kann die Wärmeformbeständigkeit gut erhalten werden.

Es bestand aber weiterhin ein Bedarf an einer nochmals verbesserten Flammwidrigkeit, ohne die Wärmeformbeständigkeit wieder deutlich zu verringern. Außerdem müssen die Flammschutzmittel aus dem Stand der Technik teilweise in mehrstufigen Prozessen hergestellt werden, was einen hohen Aufwand bedeutet. Die Mehrstufigkeit ist oft erforderlich, um die Reinheit zu verbessern und unerwünschte Anteile wie beispielsweise einen zu hohen Chlorgehalt zu vermeiden.

Es war daher weiterhin wünschenswert ein Flammschutzmittel, bevorzugt ein Phosphazen, bereitzustellen, das zu einer vorteilhaften Balance aus geringer Beeinflussung der Wärmeformbeständigkeit von thermoplastischen Polymeren, insbesondere Polycarbonaten, und verbesserter Flammschutzwirkung führt und sich leicht, bevorzugt in nur einem Reaktionsschritt, optional zuzüglich Aufreinigung, herstellen lässt. Das Flammschutzmittel soll sich dabei problemlos in die Polymermatrix einarbeiten lassen. Es war weiterhin wünschenswert, ein einfaches Verfahren zur Herstellung des Flammschutzmittels bereitzustellen. Dabei sollte das Polyphosphazen bevorzugt nach der einfachen Herstellung einen geringen Gehalt an störenden Anteilen, weiter bevorzugt einen geringen Chlorgehalt aufweisen.

Die Flammschutzwirkung kann beispielsweise über einen Sauerstoffindex, (LOI=Limiting Oxygen Index) bestimmt werden.

Es wurde überraschenderweise gefunden, dass ein Polyphosphazen hergestellt durch Umsetzung von einem cyclischen Phosphazen gemäß Formel (1)

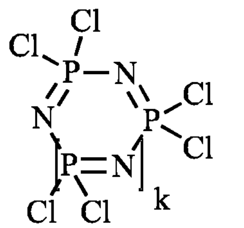

(1)

wobei k eine natürliche Zahl zwischen 1 und 10 ist
mit einem Bis-Hydroxy-terminierten Phosphonat gemäß Formel gemäß Formel (2)

$$HO\text{-}R^2\text{-}[O\text{-}P(O)(R^1)\text{-}O\text{-}R^2]_n\text{-}OH \qquad (2)$$

wobei
$R^1$ für $C_1$- bis $C_{20}$-Alkyl, $C_2$-$C_{20}$ Alkylen, $C_5$-$C_{20}$ Cycloalkyl oder $C_6$-$C_{20}$ Aryl steht
und $R^2$ für $C_1$- bis $C_{20}$-Alkyl, Phenyl oder ein Bisphenyl steht
und n für eine natürliche Zahl von 1-10, bevorzugt von 4-6 steht
in Anwesenheit einer Base, zu den gewünschten Eigenschaften führt.

Bevorzugt steht $R^1$ für $C_1$-$C_8$-Alkyl, am meisten bevorzugt für Methyl.

Bei $R^2$ ist mit Bisphenyl eine Struktureinheit gemeint, die abgeleitet ist von Bisphenol A, Bisphenol F, 4,4'-Biphenol, Phenolphtalein, Isosorbid, Bishydroxymethylfuran, Bisguaiacol F und 3,3,5-trimethylcyclohexyldiphenol. Am meisten bevorzugt ist $R^2$ abgeleitet von Bisphenol A.

Wenn im Rahmen dieses Textes ein cyclisches Phosphazen, ein Bis-Hydroxy-terminierten Phosphonat oder eine Base genannt werden, so kann es sich auch um eine Mischung aus verschiedenen cyclischen Phosphazenen, Bis-Hydroxy-terminierten Phosphonaten oder Basen handeln. "Ein" oder "eine" sind also als "mindestens ein oder eine" zu verstehen. Dies gilt auch für andere hier nicht aufgeführten Stoffe oder Struktureinheiten.

Das Polyphosphazen ist in vielen üblichen Lösungsmitteln weitgehend unlöslich und damit eine zerstörungsfreie

Strukturaufklärung mit üblichen Methoden wie NMR-Spektroskopie sehr erschwert. Das kann als Hinweis dafür dienen, dass das Polyphosphazen eine vernetzte Struktur aufweist.

Eine Verbindung mit vernetzter Struktur ist jedoch in der Lage, manche Lösungsmittel aufzunehmen, im Netzwerk festzuhalten und dadurch aufzuquellen. Das Ausmaß der Quellung kann durch den Quellungsgrad Q nach einer Lagerung in einem Lösungsmittel für eine bestimmte Zeit bestimmt werden, wobei

$$Q = \frac{a-b}{b}$$

a die Masse des gequollenen Polyphosphazens und
b die Masse des ungequollenen Polyphosphazens
sind.

Für vernetzte Strukturen ist der Quellungsgrad dann mit einem geeigneten Lösungsmittel größer als 0.

Für stark vernetzte Strukturen ist der Quellungsgrad kleiner als für wenig vernetzte Netzwerke.

Der Quellungsgrad hängt vom Lösungsmittel ab und liegt für das erfindungsgemäße Polyphosphazen nach einer Lagerung für 3 Tage in Chloroform bevorzugt in einem Bereich von 0,5 bis10, weiter bevorzugt 1 bis 5.

Das erfindungsgemäße Polyphosphazen weist bevorzugt einen Phosphorgehalt bestimmt durch Elementaranalyse von 12-20 Gew.-%, weiter bevorzugt von 14-18 Gew.-% auf.

Das erfindungsgemäße Polyphopshazen ist als Flammschutzmittel für thermoplastische Polymere, insbesondere für Polycarbonat, oder Mischungen aus mehreren Polymeren, nützlich.

Die Menge an Polyphosphazen, die zur Flammschutzausrüstung eingesetzt wird, richtet sich nach den Anforderungen der jeweiligen Anwendung und nach der Art des thermoplastischen Polymers.

Bei zu geringer Konzentration ist die Flammschutzwirkung nicht ausreichend und bei zu hoher Konzentration können beispielsweise die mechanischen Eigenschaften beeinträchtigt werden. Die Menge beträgt vorzugsweise 2 bis 20 Gew.-%, weiter bevorzugt 3 bis 12 Gew.-%, jeweils bezogen auf die thermoplastische Formmasse enthaltend das Polyphosphazen und das thermoplastische Polymer sowie optional weitere Komponenten.

**Herstellung des Polyphosphazens**

Das Polyphosphazen wird wie oben beschrieben hergestellt durch Umsetzung eines cyclischen Phosphazen gemäß Formel (1)

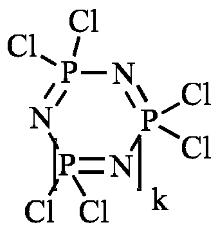 (1)

wobei k eine natürliche Zahl zwischen 1 und 10 ist
mit einem Bis-Hydroxy-terminierten Phosphonat gemäß Formel (2)

$$HO\text{-}R^2\text{-}[O\text{-}P(O)(R^1)\text{-}O\text{-}R^2]_n\text{-}OH \qquad (2)$$

wobei $R^1$ für $C_1$- bis $C_{20}$-Alkyl, $C_2$-$C_{20}$ Alkylen, $C_3$-$C_{20}$ Cycloalkyl oder $C_6$-$C_{20}$ Aryl steht und $R^2$ für $C_1$- bis $C_{20}$-Alkyl, Phenyl oder ein Bisphenyl, steht
und n für eine natürliche Zahl von 1-10, bevorzugt von 4-6 steht
in Anwesenheit einer Base.

Bevorzugt steht $R^1$ für $C_1$-$C_8$-Alkyl, am meisten bevorzugt für Methyl.

Bei $R^2$ ist mit Bisphenyl eine Struktureinheit gemeint, die abgeleitet ist von Bisphenol A, Bisphenol F, 4,4'-Biphenol, Phenolphtalein, Isosorbid, Bishydroxymethylfuran, Bisguaiacol F und 3,3,5-trimethylcyclohexyldiphenol. Am meisten bevorzugt ist $R^2$ abgeleitet von Bisphenol A.

Die cyclischen Phosphazene gemäß Formel (1) sind kommerziell erhältlich. In einer bevorzugten Ausführungsform weist das eingesetzte Phosphazen gemäß Formel (1) einen Trimerenanteil (k=1) von 60 bis 100 mol.-% auf.

In einer weiter bevorzugten Ausführungsform wird cyclisches Phosphazen mit einem Trimerenanteil von 100 mol.-% eingesetzt. Dazu kann das kommerziell verfügbare cyclische Phosphazen durch Umkristallisation mit Hexan vor dem Einsatz aufgereinigt werden.

Geeignete Bis-Hydroxy-terminierten Phosphonate und ihre Herstellung sind beispielsweise in US2012/0172500 A1, US 2014/0018471 A1 und US 8563638 B2 beschrieben. Es können auch Mischungen verschiedener solcher Phosphonate eingesetzt werden.

Als Bis-Hydroxy-terminiertes Phosphonat gemäß Formel 2 wird am meisten bevorzugt das Phosphonat gemäß Formel 3 eingesetzt. Diese Produkte (mit n= 4-6) sind von FRX Polymers (USA) unter dem Handelsnamen Nofia™ OL1000 und Nofia™ OL1001 erhältlich. Dadurch kann insbesondere mit Polycarbonat als thermoplastischem Polymer eine gute Mischbarkeit erreicht werden,

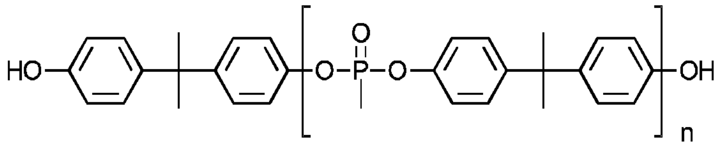

(3)

wobei n eine natürliche Zahl zwischen 1 und 10, bevorzugt von 4-6 ist.

Bevorzugt liegt das molare Verhältnis zwischen dem Bis-Hydroxy-terminiertes Phosphonat gemäß Formel (2) und dem cyclischen Phosphazen gemäß Formel (1) im Bereich von 2:1 bis 4:1, weiter bevorzugt zwischen 2,5:1 und 3,5:1.

Die eingesetzte Base ist bevorzugt ausgewählt aus 1,8-Diazabicyclo[5.4.0]undec-7-en und Pyridin. Besonders bevorzugt als Base ist dabei 1,8-Diazabicyclo[5.4.0]undec-7-en. Dadurch wird eine besonders gute Ausbeute erreicht.

Die Umsetzung kann in organischen Lösungsmitteln, insbesondere in Tetrahydrofuran (THF) durchgeführt werden.

Die Umsetzung wird bevorzugt in einem Temperaturbereich von 20 bis 80 °C durchgeführt, insbesondere bei Raumtemperatur. Die Reaktionsschritte können beispielsweise in üblichen Glaskolben durchgeführt werden.

Die Base wird bevorzugt in einem molaren Verhältnis von 0,8:1 bis 1,2:1 bezogen auf die OH-Gruppen des Polyphenolphosphonats zugegeben.

Das Polyphosphazen kann nach der Reaktion aus der Reaktionslösung beispielsweise durch Dialyse in Acetonitril oder durch Extraktion in Chloroform mit Natronlauge extrahiert werden. Danach wird die Reaktionslösung vom Lösungsmittel befreit und im Trockenschrank bei 80 °C und Vakuum getrocknet.

Das erfindungsgemäße Polyphosphazen weist bevorzugt eine Glasübergangstemperatur $T_g$ von mindestens 40 °C auf. Am meisten bevorzugt liegt die Glasübergangstemperatur zwischen 40 und 80 °C, weiter bevorzugt zwischen 50 und 70 °C.

Die Glasübergangstemperatur $T_g$ wird, sofern in der vorliegenden Erfindung nicht ausdrücklich anders beschrieben, für alle Komponenten mittels dynamischer Differenzkalorimetrie (DSC) nach DIN EN ISO 11357-1-6 (Version von 2016) bei einer Heizrate von 10 K/min mit Bestimmung der Tg als Mittelpunkttemperatur (Tangentenmethode) ermittelt.

## Thermoplastisches Polymer

Ein weiterer Gegenstand der vorliegenden Erfindung ist eine Formmasse enthaltend ein Phosphazen wie oben beschrieben und mindestens ein thermoplastisches Polymer. Es können auch Mischungen mehrerer thermoplastischer Polymere eingesetzt werden.

Beispielhaft als thermoplastische Polymere seien hier genannt Polycarbonate, Polyester, Polyestercarbonate, Polyacetale (wie Polyoxymethylen und Polyphenylenether), Polyamide, Polyolefine, Polyimide, thermoplastische Polyurethane, Polysulfone, Polyarylate, Polyarylether, Vinyl(co)polymere, Polyacrylate, Polyarylsulfone, Polyarylsulfide, Polyethersulfone, Polyetheramide, Polyphenylensulfid, Polyetherketone, Polyamidimide, Polyetherimide und Polyesterimide.

Bevorzugt kommt als thermoplastisches Polymer mindestens ein Polymer ausgewählt aus der Gruppe bestehend aus Polycarbonat, Polyestercarbonat, Vinyl(co)polymer, Polyester und Polyamid, weiter bevorzugt ein Polymer ausgewählt aus der Gruppe bestehend aus Polycarbonat, Polyestercarbonat und Polyester, besonders bevorzugt mindestens ein Polymer ausgewählt aus der Gruppe bestehend aus aromatischem Polycarbonat und aromatischem Polyestercarbonat, ganz besonders bevorzugt ein aromatisches Polycarbonat zum Einsatz. Ebenso bevorzugt sind Mischungen aus aromatischem Polycarbonat und mindestens einem Vinyl(co)polymeren.

Erfindungsgemäß geeignete aromatische Polycarbonate und/oder aromatische Polyestercarbonate sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1

495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (4)

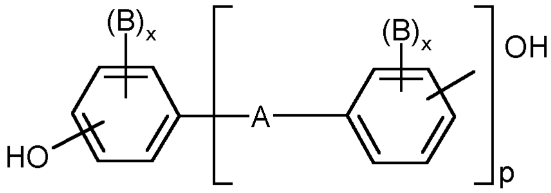

(4),

wobei

A eine Einfachbindung, C1 bis C5-Alkylen, C2 bis C5-Alkyliden, C5 bis C6-Cycloalkyliden, -O-, -SO-, -CO-, -S-, -SO2-, C6 bis C12-Arylen, an das weitere aromatische gegebenenfalls Heteroatome enthaltende Ringe kondensiert sein können,
oder ein Rest der Formel (5) oder (6)

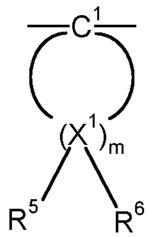

(5)

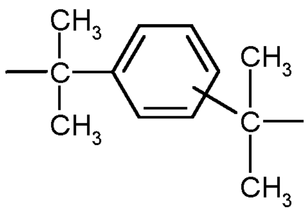

(6)

B jeweils C1 bis C12-Alkyl, vorzugsweise Methyl, Halogen, vorzugsweise Chlor und/oder Brom

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder C1 bis C6-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-C1-C5-alkane, Bis-(hydroxyphenyl)-C5-C6-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,1,3,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben bevorzugt mittlere Gewichtsmittelmolekulargewichte (Mw, gemessen durch Gelpermeationschromatographie in Methylenchlorid bei 25°C mit Polycarbonat auf Basis von Bisphenol A als Standard) von 10.000 bis 50.000 g/mol, vorzugsweise 15.000 bis 40.000 g/mol, besonders bevorzugt 20.000 bis 35.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate können auch 1 bis 25 Gew.-%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

In Frage kommende Polyester sind in bevorzugter Ausführungsform aromatisch, weiter bevorzugt handelt es sich um Polyalkylenterephthalate.

Es handelt sich hierbei in besonders bevorzugter Ausführungsform um Reaktionsprodukte aus aromatischen Dicarbonsäuren oder ihren reaktionsfähigen Derivaten, wie Dimethylester oder Anhydride, und aliphatischen, cycloaliphatischen oder araliphatischen Diolen sowie Mischungen dieser Reaktionsprodukte.

Besonders bevorzugte aromatische Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten aromatischen Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C Atomen enthalten, wie z.B. Reste von Phthalsäure, Isophthalsäure, Naphthalin-2,6-dicarbonsäure, 4,4'-Diphenyldi-carbonsäure, Bernsteinsäure, Adipinsäure, Sebacinsäure, Azelainsäure, Cyclohexandiessigsäure.

Die bevorzugten aromatischen Polyalkylenterephthalate können neben Ethylenglykol bzw. Butan¬diol-1,4-Resten bis zu 20 mol-%, vorzugsweise bis zu 10 mol-%, andere aliphatische Diole mit 3 bis 12 C Atomen oder cycloaliphatische Diole mit 6 bis 21 C Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-$\beta$-hydroxyethoxy-phenyl)-propan und 2,2-Bis-(4-hydroxypropoxyphenyl)-propan (DE-A 2 407 674, 2 407 776, 2 715 932).

Die aromatischen Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind aromatische Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen von aromatischen Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten aromatischen Polyalkylenterephthalate besitzen eine Viskositätszahl von 0,4 bis 1,5 dl/g, vorzugsweise 0,5 bis 1,2 dl/g, gemessen in Phenol/o-Dichlorbenzol (1:1 Gewichtsteile) in einer Konzentration von 0,05 g/ml gemäß ISO 307 bei 25 °C im Ubbelohde-Viskosimeter.

Die aromatischen Polyalkylenterephthalate lassen sich nach bekannten Methoden herstellen (s. z.B. Kunststoff-Handbuch, Band VIII, S. 695 ff., Carl-Hanser-Verlag, München 1973).

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C1 bis C22-Alkylgruppen oder durch Halogenatome substituiert sein können, sowie aliphatische C2 bis C22-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetra-chlorid, 1,4,5,8-Naphthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihy-droxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

Das als thermoplastisches Polymer eingesetzte Vinyl(co)polymer kann kautschukfrei oder kautschukmodifiziert sein. Ebenso kann sowohl kautschukmodifiziertes Vinyl(co)polymer als auch kautschukfreies, das heiß nicht chemisch an einen Kautschuk gebundenes oder in diesem Kautschuk eingeschlossenes kautschukfreies Vinyl(co)polymer enthalten sein.

Bei dem kautschukmodifizierten Vinyl(co)polymer handelt es sich bevorzugt um Pfropfpolymerisate von

10 bis 80 Gew.-%, vorzugsweise 20 bis 70 Gew.-%, besonders bevorzugt 25 bis 55 Gew.-% mindestens eines Vinylmonomeren auf

20 bis 90 Gew.-%, vorzugsweise 30 bis 80 Gew.-%, besonders bevorzugt 45 bis 75 Gew.-% einer oder mehrerer kautschukartiger, in bevorzugter Ausführungsform partikulärer Pfropfgrundlagen, vorzugsweise mit Glasübergangstemperaturen < 10 °C, weiter bevorzugt < 0 °C, besonders bevorzugt < -20 °C,

wobei die aus den Vinlymonomeren gebildeten Polymerketten chemisch an die Pfropfgrundlage gebunden sind oder in der Pfropfgrundlage so eingeschlossen sind, dass sie bei der Herstellung und Verarbeitung der erfindungsgemäßen Zusammensetzungen nicht aus dieser Pfropfgrundlage austreten. Diese Vinylmonomere der Pfropfpolymerisat werden auch als Pfropfhülle bezeichnet

Die Glasübergangstemperatur wird mittels dynamischer Differenzkalorimetrie (DSC) gemäß der DIN EN ISO 11357-1-6 (Version von 2016) bei einer Heizrate von 10 K/min mit Definition der Tg als Mittelpunkttemperatur (Tangentenmethode) bestimmt.

Die bevorzugten partikulären Pfropfgrundlagen haben im Allgemeinen eine mittlere Teilchengröße (d50-Wert) von 0,05 bis 10 μm, vorzugsweise 0,1 bis 5 μm, besonders bevorzugt 0,2 bis 1,5 μm.

Die mittlere Teilchengröße d50 ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

Die Vinylmonomere sind vorzugsweise Gemische aus

50 bis 99 Gew.-%, bevorzugt 65 bis 85 Gew.-%, bevorzugt 70 bis 80 Gew.-%, jeweils bezogen auf die Gesamtheit der Monomere der Pfropfhülle, Vinylaromaten und/oder kernsubstituierten Vinylaromaten (wie Styrol, α-Methylstyrol, p-Methylstyrol, p-Chlorstyrol) und/oder (Meth) Acrylsäure-(C1-C8)-Alkylester, wie Methylmethacrylat, Ethylmethacrylat und Butylacrylat, und

1 bis 50 Gew.-%, bevorzugt 15 bis 35 Gew.-%, besonders bevorzugt 20 bis 30 Gew.-%, jeweils bezogen auf die Gesamtheit der Monomere der, Vinylcyanide (ungesättigte Nitrile wie Acrylnitril und Methacrylnitril) und/oder (Meth) Acrylsäure-(C1-C8)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte sind dabei Gemische aus sind aus mindestens einem der Monomere Styrol, α-Methylstyrol und Methylmethacrylat
mit
mindestens einem der Monomere Acrylnitril, n-Butylacrylat, Maleinsäureanhydrid und Methylmethacrylat.

Besonders bevorzugte sind Gemische aus Styrol und Acrylnitril. Ebenso bevorzugt wird als Pfropfhülle Methlymethacrylat eingesetzt.

Für die Pfropfpolymerisate geeignete Pfropfgrundlagen sind beispielsweise Dien-kautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke sowie Silikon/Acrylat-Kompositkautschuke.

Bevorzugte Pfropfgrundlagen sind Dienkautschuke, beispielsweise auf Basis Butadien und Isopren, oder Gemische von Dienkautschuken oder Copolymerisate von Dienkautschuken oder deren Gemischen mit weiteren copolymerisierbaren Monomeren.

Besonders bevorzugt als Pfropfgrundlage ist reiner Polybutadienkautschuk.

Besonders bevorzugte Pfropfpolymerisate sind beispielsweise ABS-Polymerisate, wie sie z.B. in der DE-OS 2 035 390 (=US PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind. Die Pfropfcopolymerisate werden durch radikalische Polymerisation, z.B. durch Emulsions-, Suspensions-, Lösungs- oder Massepolymerisation hergestellt.

Kautschukfreie Vinyl(co)polymere sind (Co)Polymerisate von mindestens einem Vinylmonomeren, bevorzugt ausgewählt aus der Gruppe der Vinylaromaten, Vinylcyanide (ungesättigte Nitrile), (Meth) Acrylsäure-(C1 bis C8)-Alkylester, ungesättigte Carbonsäuren sowie Derivate (wie Anhydride und Imide) ungesättigter Carbonsäuren.

Insbesondere geeignet sind (Co)Polymerisate aus

50 bis 99 Gew.-%, bevorzugt 65 bis 85 Gew.-%, besonders bevorzugt 70 bis 80 Gew.-%, bezogen auf das (Co) Polymerisat, mindestens eines Monomeren ausgewählt aus der Gruppe der Vinylaromaten (wie beispielsweise Styrol, α-Methylstyrol), kernsubstituierten Vinylaromaten (wie beispielsweise p-Methylstyrol, p-Chlorstyrol) und (Meth)Acrylsäure-(C1-C8)-Alkylester (wie beispielsweise Methylmethacrylat, n-Butylacrylat, tert.-Butylacrylat) und

1 bis 50 Gew.-%, bevorzugt 15 bis 35 Gew.-%, besonders bevorzugt 20 bis 30 Gew.-%, bezogen auf das (Co) Polymerisat, mindestens eines Monomeren ausgewählt aus der Gruppe der Vinylcyanide (wie beispielsweise ungesättigte Nitrile wie Acrylnitril und Methacrylnitril), (Meth) Acrylsäure-(C1-C8)-Alkylester (wie beispielsweise Methylmethacrylat, n-Butylacrylat, tert.-Butylacrylat), ungesättigte Carbonsäuren und Derivate ungesättigter Carbonsäuren (beispielsweise Maleinsäureanhydrid und N-Phenyl-Maleinimid).

Diese (Co)Polymerisate sind harzartig, thermoplastisch und kautschukfrei. Besonders bevorzugt ist das Polymerisat aus Methylmethacrylat sowie das (Co)Polymerisat aus Styrol und Acrylnitril.

Derartige (Co)Polymerisate sind bekannt und lassen sich durch radikalische Polymerisation, insbesondere durch Emulsions-, Suspensions-, Lösungs- oder Massepolymerisation herstellen.

Die (Co)Polymerisate besitzen ein gewichtsgemitteltes Molekulargewicht (Mw), bestimmt per Gelpermeationschromatographie mit Polystyrol als Standard, von 50000 bis 200000 g/mol, bevorzugt von 70000 bis 170000 g/mol, besonders bevorzugt von 80000 bis 130000 g/mol.

In einer Ausführungsform der vorliegenden Erfindung werden als thermoplastische Polymere amorphe und/oder semi-kristalline Polyamide verwendet. Geeignete Polyamide sind aliphatische Polyamide, zum Beispiel PA-6, PA-11, PA-12, PA-4,6, PA-4,8, PA-4,10, PA-4,12, PA-6,6, PA-6,9, PA-6,10, PA-6,12, PA-10,10, PA-12,12, PA-6/6,6-Copolyamid, PA-6/12-Copolyamid, PA-6/11-Copolyamid, PA-6,6/11-Copolyamid, PA-6,6/12-Copolyamid, PA-6/6,10-Copolyamid, PA-6,6/6,10-Copolyamid, PA-4,6/6-Copolyamid, PA-6/6,6/6,10-Terpolyamid, und Copolyamid aus 1,4-Cyclohexandicarbonsäure und 2,2,4- und 2,4,4-Trimethylhexamethylendiamin, aromatische Polyamide, zum Beispiel PA-6,1, PA-6,1/6,6-Copolyamid, PA-6,T, PA-6,T/6-Copolyamid, PA-6,T/6,6-Copolyamid, PA-6,1/6,T-Copolyamid, PA-6,6/6,T/6,1-Copolyamid, PA-6,T/2-MPMDT-Copolyamid (2-MPMDT = 2-Methylpentamethylendiamin), PA-9,T, Copolyamid aus Terephthalsäure, 2,2,4- und 2,4,4-Trimethylhexamethylendiamin, Copolyamid aus Isophthalsäure, Laurinlactam und 3,5-Dimethyl-4,4-diaminodicyclohexylmethan, Copolyamid aus Isophthalsäure, Azelainsäure und/oder Sebacinsäure und 4,4-Diaminodicyclohexylmethan, Copolyamid aus Caprolactam, Isophthalsäure und/oder Terephthalsäure und 4,4-Diaminodicyclohexylmethan, Copolyamid aus Caprolactam, Isophthalsäure und/oder Terephthalsäure und Isophorondiamin, Copolyamid aus Isophthalsäure und/oder Terephthalsäure und/oder weiteren aromatischen oder aliphatischen Dicarbonsäuren, optional alkylsubstituiertem Hexamethylendiamin und alkylsubstituiertem 4,4-Diaminodicyclohexylamin oder deren Copolyamide sowie Mischungen zuvor genannter Polyamide.

In einer weiteren Ausführungsform der vorliegenden Erfindung werden als thermoplastische Polymere semi-kristalline Polyamide verwendet, welche vorteilhafte thermische Eigenschaften aufweisen. Hierbei werden semi-kristalline Polyamide verwendet, welche einen Schmelzpunkt von mindestens 200 °C, bevorzugt von mindestens 220 °C, weiter bevorzugt von mindestens 240 °C und noch weiter bevorzugt von mindesten 260 °C aufweisen. Je höher der Schmelzpunkt der semikristallinen Polyamide, desto vorteilhafter ist das thermische Verhalten der erfindungsmäßen Zusammensetzungen. Der Schmelzpunkt wird mittels DSC ermittelt.

Bevorzugte semi-kristalline Polyamide sind ausgewählt aus der Gruppe, enthaltend PA-6, PA-6,6, PA-6,10, PA-4,6, PA-11, PA-12, PA-12,12, PA-6,1, PA-6,T, PA-6,T/6,6-Copolyamid, PA-6,T/6-Copolyamid, PA-6/6,6-Copolyamid, PA-6,6/6,T/6,1-Copolyamid, PA-6,T/2-MPMDT-Copolyamid, PA-9,T, PA-4,6/6-Copolyamid und deren Mischungen oder Copolyamide.

Am meisten bevorzugt wird als thermoplastisches Polymer ein aromatisches Polycarbonat auf Basis von Bisphenol A eingesetzt, optional zusammen mit Vinyl(co)polymer, das weiterhin kautschukmodifiziert sein kann.

**Weitere Komponenten in der Formmasse**

Als weitere Komponente können in der Formmasse optional eine oder mehrere Polymeradditive sowie werden, bevorzugt ausgewählt aus der Gruppe bestehend aus weiteren Flammschutzmitteln, Antidrippingmitteln, Flammschutzsynergisten, Rauchinhibitoren, Gleit- und Entformungsmitteln, Nukleiermitteln, polymere und nichtpolymere Antistatika, Leitfähigkeitsadditiven, Stabilisatoren (z.B. Hydrolyse-, Wärmealterungs- und UV-Stabilisatoren sowie Umesterungsinhibitoren), Fließfähigkeitspromotoren, Phasenverträglichkeitsvermittlern, Schlagzähigkeitsmodifikatoren (sowohl mit als auch ohne Kern-Schale-Struktur), Füll- und Verstärkungsstoffen sowie Farbstoffen und Pigmenten.

Wenn die Formmasse neben dem thermoplastischen Polymer und dem Polyphosphazen eine weitere Komponente enthält, so wird diese bevorzugt in einem Anteil von 0,1 bis 50 Gew.-% eingesetzt. Dieser Anteil ist dann die Summe aller weiteren Komponenten.

Dabei werden Antidrippingmittel, Flammschutzsynergisten, Rauchinhibitoren, Gleit- und Entformungsmittel, Nukleiermittel, nichtpolymere Antistatika, Leitfähigkeitsadditive und Stabilisatoren bevorzugt jeweils in einem Anteil von 0,1 bis 1 Gew.-% und in Summe bevorzugt in einem Anteil von 0,1 bis 3 Gew.-%, jeweils bezogen auf die Formmasse verwendet.

Werden weitere Flammschutzmittel verwendet, so werden davon bevorzugt 1 bis 20 Gew.-%, bezogen auf die Formmasse eingesetzt.

Werden Fließfähigkeitspromotoren, polymere Antistatika und Phasenverträglichkeitsvermittler eingesetzt, so ist der verwendete Anteil jeweils bevorzugt 1 bis 10 Gew.-% und in Summe bevorzugt 1 bis 15 Gew.-%, jeweils bezogen auf die Formmasse.

Werden Farbstoffe oder Pigmente eingesetzt, so ist der verwendete Anteil bevorzugt 0,1 bis 10 Gew.-%, bezogen auf die Formmasse.

Werden Füll- und Verstärkungsstoffe eingesetzt, so ist der verwendete Anteil bevorzugt 3 bis 30 Gew.-%, bezogen auf die Formmasse eingesetzt.

In bevorzugter Ausführungsform wird mindestens ein Polymeradditiv ausgewählt aus der Gruppe bestehend aus Gleit- und Entformungsmitteln, Stabilisatoren, Fließfähigkeitspromotoren, Phasenverträglichkeitsvermittlern, Schlagzähigkeitsmodifikatoren, weiteren polymeren Blendpartner, Farbstoffen und Pigmenten eingesetzt.

## Herstellung der Formmasse und von Formkörper daraus

Aus dem erfindungsgemäßen Polyphosphazen und dem thermoplastischen Polymer (oder Mischungen von mehreren thermoplastischen Polymeren) sowie den optionalen weiteren Komponenten kann eine Formmasse hergestellt werden. Das Polyphopshazen, das thermoplastische Polymer (oder Mischungen mehrerer thermoplastischer Polymere) und die optionalen weiteren Komponenten bilden dann die Bestandteile der Zusammensetzung der Formmasse..

Die erfindungsgemäße Formmasse kann beispielsweise hergestellt werden, indem man die jeweiligen Bestandteile in bekannter Weise vermischt und bei Temperaturen von bevorzugt 200 °C bis 340 °C, besonders bevorzugt bei 240 bis 320 °C und ganz besonders bevorzugt 240 °C bis 300 °C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Dabei wird zumindest das thermoplastische Polymer aufgeschmolzen, alle Bestandteile der Zusammensetzung ineinander dispergiert und/oder gelöst und in einem weiteren Schritt die erhaltene Schmelze durch Abkühlen wieder verfestigt und optional granuliert. Es ist möglich, die Schritte der Verfestigung und Granulierung in beliebiger Reihenfolge zueinander durchzuführen.

Unter Formmasse wird also das Produkt verstanden, das erhaltend wird, wenn die Bestandteile der Zusammensetzung schmelzcompoundiert und schmelzextrudiert werden.

Die Vermischung der einzelnen Bestandteile kann in bekannter Weise sowohl sukzessive als auch simultan erfolgen, und zwar sowohl bei etwa 20 °C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmasse.

Die erfindungsgemäße Formmasse kann zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen und Bauteile für Nutzfahrzeuge, insbesondere für den Automobilbereich. Die erfindungsgemäßen Zusammensetzungen eignen sich auch zur Herstellung von folgenden Formkörpern oder Formteilen: Innenausbauteile für Schienenfahrzeuge, Schiffe, Flugzeuge, Busse und andere Kraftfahrzeuge, Karosserieteile für Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte.

Nachfolgend werden weitere Ausführungsformen 1 bis 33 beschrieben:

1. Polyphosphazen hergestellt durch Umsetzung von einem cyclischen Phosphazen gemäß Formel (1)

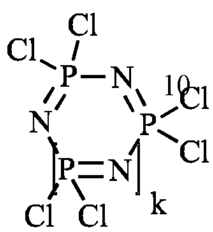

(1)

wobei k eine natürliche Zahl zwischen 1 und 10 ist

mit einem Bis-Hydroxy-terminierten Phosphonaten gemäß Formel (2)

$$HO\text{-}R^2\text{-}[O\text{-}P(O)(R^1)\text{-}O\text{-}R^2]_n\text{-}OH \qquad (2)$$

wobei $R^1$ für $C_1$- bis $C_{20}$-Alkyl, $C_2$-$C_{20}$ Alkylen, $C_3$-$C_{20}$ Cycloalkyl oder $C_6$-$C_{20}$ Aryl steht,
$R^2$ für $C_1$- bis $C_{20}$-Alkyl, Phenyl oder ein Bisphenyl steht
und n für eine natürliche Zahl von 1-10 steht
in Anwesenheit einer Base.

2. Polyphosphazen gemäß Ausführungsform 1, dadurch gekennzeichnet, dass n für eine natürliche Zahl von 4-6 steht.

3. Polyphosphazen gemäß Ausführungsform 1 oder 2, dadurch gekennzeichnet, dass $R^1$ für Methyl steht.

4. Polyphosphazen gemäße einer der vorhergehenden Ausführungsformen, dadurch gekennzeichnet, dass $R^2$ für ein Bisphenyl abgeleitet von Bisphenol A steht.

5. Polyphosphazen gemäß einer der vorhergehenden Ausführungsformen, dadurch gekennzeichnet, dass das molare Verhältnis von eingesetztem Bis-Hydroxy-terminierten Phosphonat gemäß Formel (2) zum eingesetzten cyclischen Phosphazen gemäß Formel (1) im Bereich von 2:1 bis 4:1, bevorzugt 2,5:1 bis 3,5:1 liegt.

6. Polyphosphazen gemäß einer der vorhergehenden Ausführungsformen, dadurch gekennzeichnet, dass das Polyphosphazen einen Phosphorgehalt von 12 bis 20 Gew.-% aufweist.

7. Polyphosphazen gemäß einer der vorhergehenden Ausführungsformen, dadurch gekennzeichnet, dass das Polyphosphazen einen Phosphorgehalt von 14 bis 18 Gew.-% aufweist.

8. Polyphosphazen gemäß einer der vorhergehenden Ausführungsformen, dadurch gekennzeichnet, dass das Phosphazen einen Quellungsgrad $Q = \frac{a-b}{b}$ nach einer Lagerung für 3 Tage in Chloroform von 0,5 bis 10 aufweist, wobei

a die Masse des gequollenen Polyphosphazens und
b die Masse des ungequollenen Polyphosphazens
sind.

9. Polyphosphazen gemäß Ausführungsform 8, dadurch gekennzeichnet, dass der Quellungsgrad Q im Bereich von 1 bis 5 liegt.

10. Polyphosphazen gemäß einer der vorherigen Ausführungsformen, dadurch gekennzeichnet, dass die eingesetzte Base ausgewählt aus 1,8-Diazabicyclo[5.4.0]undec-7-en und Pyridin ist.

11. Polyphosphazen gemäß einer der vorherigen Ausführungsformen, dadurch gekennzeichnet, dass die eingesetzte Base 1,8-Diazabicyclo[5.4.0]undec-7-en ist.

12. Polyphosphazen gemäß einer der vorherigen Ausführungsformen, dadurch gekennzeichnet, das bei der Herstellung die Base in einem molaren Verhältnis von 0,8:1 bis 1,2:1 bezogen auf die OH-Gruppen des Bis-Hydroxy-terminierten Phosphonats zugegeben wird.

13. Polyphosphazen gemäß einer der vorhergehenden Ausführungsformen, dadurch gekennzeichnet, dass das Polyphosphazen eine Glasübergangstemperatur ermittelt über dynamische Differenzkalorimetrie von mindestens 40 °C aufweist.

14. Polyphosphazen gemäß einer der vorhergehenden Ausführungsformen, dadurch gekennzeichnet, dass das Polyphosphazen eine Glasübergangstemperatur ermittelt über dynamische Differenzkalorimetrie von 50-70 °C °C aufweist.

15. Polyphosphazen gemäß einer der vorhergehenden Ausführungsformen, dadurch gekennzeichnet, dass als cyclisches Phosphazen gemäß Formel (1) eine Verbindung mit einem Trimerenanteil (k=1) von 60 bis 100 mol.-%, bezogen auf das cyclische Phosphazen gemäß Formel (1), eingesetzt wird.

16. Polyphosphazen gemäß einer der vorhergehenden Ausführungsformen, dadurch gekennzeichnet, dass als Bis-Hydroxy-terminiertes Phosphonat eine Verbindung gemäß Formel (3) eingesetzt wird,

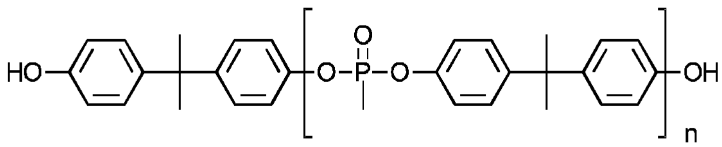

(3)

wobei n für eine natürliche Zahl zwischen 4 und 6 steht.

17. Polyphosphazen gemäß einer der vorhergehenden Ausführungsformen, dadurch gekennzeichnet, dass die Umetzung in einem aprotischen Lösungsmittel durchgeführt werden.

18. Polyphosphazen gemäß einer der vorhergehenden Ausführungsformen, dadurch gekennzeichnet, dass die Umsetzung in THF durchgeführt werden.

19. Formmasse enthaltend ein thermoplastisches Polymer und ein Polyphosphazen gemäß einer der vorhergehenden Ausführungsformen.

20. Formmasse gemäß Ausführungsform 19, dadurch gekennzeichnet, dass das thermoplastische Polymer ein Polyester, Polycarbonat, Vinyl(co)polymer, Polyamid oder Mischungen daraus ist.

21. Formmasse gemäß Ausführungsform 19, dadurch gekennzeichnet, dass das thermoplastische Polymer ein aromatisches Polycarbonat oder eine Mischung aus aromatischem Polycarbonat und Vinyl(co)polymer, das weiterhin kautschukmodifiziert sein kann, ist.

22. Formmasse gemäß einer der Ausführungsformen 19 bis 21, dadurch gekennzeichnet, dass das Polyphosphazen in einem Anteil von 2 bis 20 Gew.-% enthalten ist.

23. Formmasse gemäß einer der Ausführungsformen 19 bis 22, dadurch gekennzeichnet, dass das Polyphosphazen in einem Anteil von 3 bis 12 Gew.-% enthalten ist.

24. Formkörper enthaltend eine Formmasse gemäß einer der Ausführungsformen 19 bis 23.

25. Verfahren zur Herstellung eines Polyphosphazens umfassend die Umsetzung von einem cyclischen Phosphazen gemäß Formel (1)

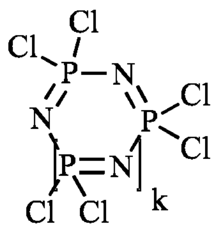

(1)

wobei k eine natürliche Zahl zwischen 1 und 10 ist

mit einem Bis-Hydroxy-terminierten Phosphonat gemäß Formel (2) in Anwesenheit einer Base

$$HO\text{-}R^2\text{-}[O\text{-}P(O)(R^1)\text{-}O\text{-}R^2]_n\text{-}OH \qquad (2)$$

wobei $R^1$ für $C_1$- bis $C_{20}$-Alkyl, $C_2$-$C_{20}$ Alkylen, $C_3$-$C_{20}$ Cycloalkyl oder $C_6$-$C_{20}$ Aryl steht $R^2$ für $C_1$-bis $C_{20}$-Alkyl, Phenyl oder ein Bisphenyl steht und n für eine ganze Zahl von 1-10.

26. Verfahren gemäß Ausführungsform 25, wobei n für eine ganze Zahl von 4-6 steht.

27. Verfahren gemäß Ausführungsform 25 oder 26, dadurch gekennzeichnet, dass $R^1$ für Methyl steht.

28. Verfahren gemäß einer der Ausführungsformen 25 bis 27, dadurch gekennzeichnet, dass $R^2$ für ein Bisphenyl abgeleitet von Bisphenol A steht.

29. Verfahren gemäß einer der Ausführungsformen 25 bis 28, dadurch gekennzeichnet, dass als Bis-Hydroxy-terminiertes Phosphonat eine Verbindung gemäß Formel (3) eingesetzt wird.

30. Verfahren gemäß einer der Ausführungsformen 25 bis 29, dadurch gekennzeichnet, dass die Umsetzung bei einer Temperatur zwischen 20 und 80 °C durchgeführt werden.

31. Verfahren gemäß einer der vorhergehenden Ausführungsformen 25 bis 30, dadurch gekennzeichnet, dass die Synthese in einem aprotischen Lösungsmittel durchgeführt werden.

32. Verfahren gemäß einer der vorhergehenden Ausführungsformen 25 bis 31, dadurch gekennzeichnet, dass die Umsetzung in THF durchgeführt werden.

33. Verfahren gemäß einer der Ausführungsformen 25 bis 32, dadurch gekennzeichnet, dass nach Schritt b) weiterhin ein Aufreinigungsschritt ausgewählt aus Filtration und Extraktion erfolgt.

34. Formmasse enthaltend ein thermoplastisches Polymer und ein Polyphosphazen hergestellt nach einem Verfahren gemäß einem der Ausführungsformen 25 bis 33.

**Beispiele:**

**Materialien**

Hexachlorocyclotriphosphazen (HCCP, abcr) wurde aus Hexan umkristallisiert. Bis-Hydroxy-terminierte Phosphonat der Formel (3) mit n(gemittelt) = 6 (Nofia™ OL1000, FRX Polymers) 1,8-Diazabicyclo [5.4.0]undec-7-ene (DBU, Alfa Aesar), Tetrahydrofuran (THF, VWR), Toluol (VWR) und Acetonitril (MeCN, Roth) wurden ohne weitere Aufreinigung verwendet.

Als Polycarbonat wurde Makrolon® 2600 (Covestro) verwendet.

Bei Rabitle™ FP 110 (Fushimi, Japan) handelt es sich um ein Phenoxyphosphazen der Formel (6) mit einem Anteil an Oligomeren mit k = 1 von 70 Mol-%, einem Anteil an Oligomeren mit k = 2 von 18 Mol-% und einem Anteil an Oligomeren mit k ≥ 3 von 12 Mol-%. Dieses Phosphazen wurde als Vergleichsbeispiel 1 eingesetzt.

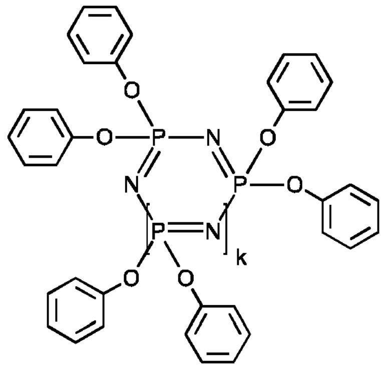

(6)

**Analytik/Charakterisierung**

Die **TGA-gekoppelte FTIR** Spektroskopie wurde mittels einem STA 600 Messgerät von Perkin Elmer in einem Temperaturbereich von 30 bis 800 °C mit einer Heizrate von 10 $°C \cdot min^{-1}$ und einem Sauerstofffluss von 150 $mL \cdot min^{-1}$ durchgeführt. Enthalten die Phosphazene dabei noch Chloratome, so bildet sich bei der Zersetzung HCl, das wiederum als IR- Signal detektiert wird **Sauerstoffindex (Limiting Oxygen Index, LOI)** Messungen erfolgte nach der Norm ISO 4589:2017. Die Proben wurden vor der Messungen mindestens für 88 h bei 22 °C und 55% Luftfeuchtigkeit konditioniert.

Die **Quellung** der Polymere wurde in Chloroform untersucht. Die (Poly)Phosphazene wurden 3 Tage in diesem Lösungsmittel gelagert und das Gewicht vor und nach der Quellung bestimmt. Die Berechnung des Quellungsgrades Q erfolgt wie oben beschrieben gemäß

$$Q = \frac{a-b}{b} \ ,$$

wobei

a die Masse des gequollenen Polyphosphazens und
b die Masse des ungequollenen Polyphosphazens
sind.

**DSC** Untersuchungen für die Ermittlung der Glasübergangstemperatur $T_g$ wurden mit einem Perkin Elmer DSC 8500 Gerät nach DIN EN ISO 11357-1-6 (Version von 2016) im Temperaturbereich von 20 bis 250 °C und -95 bis 250 °C mit einer Heizrate von 10 °C·min$^{-1}$ durchgeführt. Die Bestimmung der $T_g$ wurde als Mittelpunkttemperatur (Tangentenmethode) ermittelt.

Folgende Phosphazen-basierte FR Additive wurden hergestellt oder erhalten und mit Makrolon® 2600 zu PC/FR Blends verarbeitet:

**Erfindungsgemäßes Beispiel: Synthese des Polyphosphazenes**

Zu einer Lösung Bis-Hydroxy-terminierte Phosphonat des Handelsnamen Nofia™ OL1000 (12,91 g, 0,01 mol) und HCCP (9,6 g, 0,03 mol) in 1000 mL THF wurde bei Raumtemperatur DBU (2,75 mL, 0,02 mol, 1 molares Verhältnis (=MR) zu den OH Gruppen des Polyphosphonats ist gleich 1) tropfenweise innerhalb von 5 min hinzugegeben und die Reaktion über Nacht gerührt. Nach Ablauf der Reaktion wurde das Lösungsmittel eingeengt und die Reaktionslösung in MeCN für 5 Tage dialysiert und für weitere 5 Tage bei 80 °C unter Vakuum getrocknet. Das Produkt wurde mittels TGA-gekoppelter IR Spektroskopie untersucht und zeigte keine Bildung identifizierbarer Mengen an Chlorwasserstoff. Das Produkt wurde als Feststoff (18,8 g, 84%) erhalten. Erwartungsgemäß war eine Strukturaufklärung mittels NMR-Spektroskopie aufgrund des Vernetzungsgrades des Produktes und der damit einhergehenden unzureichenden Löslichkeit nicht möglich.

**Vergleichsbeispiel 1: Phenoxyphosphazenes Rabitle™ FP110:**

Für das Vergleichsbeispiel 1 wurde das kommerziell erhältliche Rabitle™ FP 110 verwendet und wie erhalten eingesetzt.

**Vergleichsbeispiel 2: Synthese eines Phenoxyphosphazens in Anlehnung an EP 1104766** B1 **(Molares Verhältnis von insgesamt eingesetztem Phenolat zum eingesetzten cyclischen Phosphazen 6:1)**

Das im Beispielteil der EP 1104766 B1 beschriebene Phenoxyphosphazen wurde über eine abgewandelte Route nachgestellt, um den Einsatz von metallischem Natrium und Lithium zu umgehen. Es konnte eine Verbindung mit ähnlichem Molekulargewicht wie in EP 1104766 B1 beschrieben erhalten werden (1403 g/mol im Vergleich zu 1130 g/mol nach EP 1104766 B1 ). Dafür wurde zu einer Lösung aus HCCP (11,59 g, 0,03 mol) in 375 mL MeCN bei RT ein Gemisch aus BPA (5,71 g, 0,02 mol), Natriumphenolat (12,9 g, 0,11 mol) und DBU (3,4 mL, MR=0.5) in 80 mL THF innerhalb von 1 h zugetropft. Nach 5 h Reaktionszeit wurde zu dieser Lösung Natriumphenolat (8,08 g, 0,07 mol) in 100 mL Toluol hinzugegeben und die Reaktionslösung bei RT über Nacht gerührt. Nach Reaktionsende wurde das Lösungsmittel im Vakuum eingeengt, der Rückstand in 100 mL Toluol aufgenommen und mit 100 mL einer 2%igen wässrigen NaOH Lösung 3-mal extrahiert. Die organische Phase wurde zusätzlich 3-mal mit 100 mL dest. Wasser extrahiert und das Lösungsmittel im Vakuum entfernt. Das erhaltene Produkt wurde 4 Tage bei 80 °C unter Vakuum getrocknet und als Gel (18,6 g) isoliert.

**Vergleichsbeispiel 3: Synthese eines Phenoxyphosphazens in Anlehnung an CN 102675591 A, (Molares Verhältnis von eingesetztem Phenol zum eingesetzten cyclischen Phosphazen 4,2:1)**

HCCP (1,00 g, 2,88 mmol) wurde in 100 mL MeCN gelöst. Eine Lösung aus Phenol (1,14 g, 12,08 mmol) und DBU (1,8 mL, 12,08 mmol) in 40 mL MeCN wurde tropfenweise innerhalb einer Stunde in die HCCP Lösung hinzugegeben. Die Reaktionslösung wurde über Nacht gerührt. Nach Ende der Reaktionszeit wurde eine Lösung aus BPA (1,44 g, 6,33 mmol) und DBU (2,6 mL, 17,26 mmol) in 40 mL MeCN in die Reaktionslösung innerhalb einer Stunde hinzugetropft und über Nacht gerührt. Danach wurde die Reaktionslösung im Vakuum eingeengt und anschließend mit 50 mL Toluol versetzt. Die organische Phase wurde drei-mal mit 50 mL 2%iger wässriger NaOH Lösung und drei-mal mit 50 mL dest. Wasser extrahiert. Das Lösungsmittel wurde im Vakuum entfernt und der Rückstand vier Tage bei 80 °C im Vakuum getrocknet. Das Produkt wurde als viskoses Gel (3,04 g) erhalten.

**Vergleichsbeispiel 4: Synthese eines Polyphosphazenes wie in WO 2021/043654 A1 beschrieben**

Zu einer Lösung aus Phenol (8,66 g, 0,09 mol) und HCCP (10,67 g, 0,03 mol) in 2 L MeCN wurde bei Raumtemperatur DBU (14 mL, 0,09 mol, molares Verhältnis (=MR) zu den OH Gruppen des Phenols ist gleich 1) tropfenweise innerhalb von 30 min hinzugegeben. Nach 2 h wurden BPA (13,6 g, 0,06 mol) und DBU (18 mL, 0,12 mol, MR zu den OH Gruppen vom BPA = 1) in die Reaktionslösung hinzugegeben und die Reaktion über Nacht gerührt. Nach Ablauf der Reaktion wurde das Lösungsmittel abdekantiert und das Produkt in Form eines Geles in 100 mL THF/Toluol Gemisch aufgenommen. Das Produktgemisch wurde mit THF und MeCN abwechselnd gewaschen und für 4 Tage bei 80 °C unter Vakuum getrocknet. Das Produkt wurde als kristalliner Feststoff (9,8 g) erhalten.

**Vergleichsbeispiel 5: Synthese eine Polyphosphazens aus HCCP und Bisphenol A in einem Reaktionsschritt.**

Zu einer Lösung aus HCCP (0,4 g, 1,15 mmol ) in 75 mL MeCN wurde bei Raumtemperatur DBU (1,55 mL, 1,5 Äq.) und BPA (0,79 g, 3,45 mmol) gegeben und die Reaktion 12 Stunden bei Raumtemperatur gerührt. Nach Ablauf der Reaktion wurde das Lösungsmittel abdekantiert und die Niederschläge wurden durch Zentrifugation (8000 rpm, 10 min) isoliert und viermal mit Acetonitril bzw. destilliertem Wasser gewaschen. Nach der Gefriertrocknung wurde ein weißes Pulver erhalten. Das Produkt wurde als Feststoff in einer Ausbeute von 65% erhalten. Das Produkt wurde mittels TGA-gekoppelte IR Spektroskopie untersucht und das Spektrum weist auf die Bildung größerer Mengen von HCl hin, so dass es gegenüber dem erfindungsgemäßen Beispiel einen stark erhöhten Chlorgehalt besitzt.

**Herstellung von PC/FR Blends**

Makrolon® 2600 wurde mit jeweils verschiedenen Gewichtsanteilen des erfindungsgemäßen Polyphosphazens und der Vergleichsbeispiele 1-3 in einem Micro 15cc Twin Screw Compounder der Firma DSM vermischt. Auf diese Weise wurden PC/FR Blends mit 90:10, 80:20 und 70:30 Gew.-% PC zu FR Additiv hergestellt. Für die LOI Messungen wurden Probekörper nach DIN EN ISO 4589-2:1999+A1:2006 in den Maßen 70x6,5x3 $mm^3$ und für die DMA Messungen Probekörper in den Maßen 60x13x2 $mm^3$ gespritzt.

Das Makrolon® 2600 wurde nach DIN EN ISO 7391-2:2006 (D) für (5 $\pm$ 1) h bei (120 $\pm$ 3) °C in einem Granulattrockner (HELIOS WINstandard) vorgetrocknet und direkt weiterverarbeitet. Die Compoundierung wurde bei 270 °C in Stickstoffatmosphäre und einer Schneckenumdrehungszahl von 100 U/min durchgeführt.

**Ergebnisse:**

**Tabelle 1:** Tg und Quellungsgrade der Reinstoffe

| Beispiel | FR Additiv | Tg | Quellungsgrad in Chloroform |
|---|---|---|---|
| Erfindungsgemäßes Beispiel | Polyphosphazen | 62 °C | 2,1 |
| Vergleichsbeispiel 1 | Rabitle™ FP110 | -13,7 °C | 0 |
| Vergleichsbeispiel 2 | Anlehnung an EP 1104766 B1 | 20,6 °C | 0 |
| Vergleichsbeispiel 3 | Anlehnung an CN 102675591 A | -4.7 °C | 0 |
| Vergleichsbeispiel 4 | Gemäß WO 2021/043654 A1 | 107,9 °C | 6,07 |

Die Ergebnisse in Tabelle 1 zeigen, dass das erfindungsgemäße Polyphosphazen eine deutlich höhere Glasübergangstemperatur aufweist als die Phosphazene aus den Vergleichsbeispielen 1 bis 3. Weiterhin deutet der gemessene Quellungsgrad auf eine vernetzte Struktur wie bei Vergleichsbeispiel 4 hin.

**Tabelle 1: LOI und $T_g$ der PC/FR Blends**

| PC/FR Blends mit | FR Additiv | LOI* | $T_g$ der PC/FR Blends Gew.-% PC/FR 100:00 | 90:10 | 80:20 |
|---|---|---|---|---|---|
| erfindungsgemäßem Beispiel | Erfindungsgemäß | 32 | 149 °C | 141 °C | 132 °C |
| Vergleichsbeispiel 1 | Rabitle™ FP100 | 29 | 149 °C | 130 °C | 107 °C |

(fortgesetzt)

| PC/FR Blends mit | FR Additiv | LOI* | $T_g$ der PC/FR Blends | | |
|---|---|---|---|---|---|
| | | | Gew.-% PC/FR | | |
| | | | 100:00 | 90:10 | 80:20 |
| Vergleichsbeispiel 2 | Anlehnung an EP 1104766 B1 | 28 | 149 °C | 141 °C | 129 °C |
| Vergleichsbeispiel 3 | Anlehnung an CN 102675591 A | - | 149 °C | 111 °C | - |
| Vergleichsbeispiel 4 | Wie in WO 2021/043654 A1 | 29 | 149°C | 146 °C | 143 °C |
| *Die LOI Prüfungen wurden für PC/FR Blends mit 90:10 Gew.-% PC zu FR Additiv durchgeführt. | | | | | |

Tabelle 2 fasst die Ergebnisse der verschiedenen PC/FR Blends zusammen und verdeutlicht die gute Flammschutzwirkung der Phosphazene. Mit dem erfindungsgemäßen Polyphosphazen wird jedoch die Glasübergangstemperatur einer Polycarbonatformmasse geringer abgesenkt als mit den bekannten Phosphazenen gemäß den Vergleichsbeispielen 1, 2 und 3. Insbesondere der Einsatz des FR Additivs aus Vergleichsbeispiel 3 führte schon bei einem Anteil von 10 Gew-.% zu einer sehr starken Absenkung der Glasübergangstemperatur und zu einem spröden und leicht brüchigen PC/FR Blend. Für das Vergleichsbeispiel 3 war es nicht möglich, normgerechte Prüfkörper für eine Bestimmung des LOI-Wertes herzustellen. Gegenüber dem Einsatz von Vergleichsbeispiel 4 als FR Additiv ist die erhaltene Glasübergangstemperatur der Polycarbonat-Formmasse etwas geringer. Dafür aber ist die Flammwidrigkeit (LOI) deutlich verbessert, so dass das gesamte Eigenschaftsprofil aus Wärmeformbeständigkeit und Flammwidrigkeit bei dem erfindungsgemäßen Beispiel vorteilhaft ist.

Weiterhin kann das erfindungsgemäße Polyphosphazen durch ein sehr einfaches Verfahren mit nur einem Reaktionsschritt erhalten werden. Dieses Polyphosphazen enthält nur wenig Chlor, das für viele Thermoplaste und für viele Anwendungen wegen ungünstiger Eigenschaften unerwünscht ist. Versucht man ein Polyphosphazen wie in Vergleichsbeispiel 4 in nur einem Reaktionsschritt herzustellen (Vergleichsbeispiel 5), so ist der Chlorgehalt deutlich größer und damit die Anwendbarkeit merklich eingeschränkt.

## Patentansprüche

**1.** Polyphosphazen hergestellt durch Umsetzung von einem cyclischen Phosphazen gemäß Formel (1)

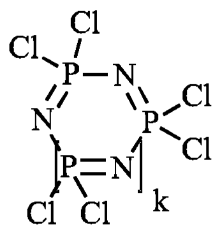

(1)

wobei k eine natürliche Zahl zwischen 1 und 10 ist

mit einem Bis-Hydroxy-terminierten Phosphonat gemäß Formel (2)

$$HO\text{-}R^2\text{-}[O\text{-}P(O)(R^1)\text{-}O\text{-}R^2]_n\text{-}OH \qquad (2)$$

wobei $R^1$ für $C_1$- bis $C_{20}$-Alkyl, $C_2$-$C_{20}$ Alkylen, $C_3$-$C_{20}$ Cycloalkyl oder $C_6$-$C_{20}$ Aryl steht $R^2$ für $C_1$-bis $C_{20}$-Alkyl, Phenyl oder ein Bisphenyl steht
und n für 1-10 steht,
in Anwesenheit einer Base

**2.** Polyphosphazen gemäß Anspruch 1, **dadurch gekennzeichnet, dass** das molare Verhältnis zwischen dem Bis-Hydroxy-terminiertes Phosphonat gemäß Formel (2) und dem cyclischen Phosphazen gemäß Formel (1) im Bereich von 2:1 bis 4:1 liegt.

**3.** Polyphosphazen gemäß einem der vorhergehenden Ansprüche, **dadurch gekennzeichnet, dass** das Polyphosphazen einen Phosphorgehalt von 12 bis 20 Gew.-% aufweist.

**4.** Polyphosphazen gemäß Anspruch 1, **dadurch gekennzeichnet, dass** das Phosphazen einen Quellungsgrad $Q = \frac{a-b}{b}$ nach einer Lagerung für 3 Tage in Chloroform von 0,5 bis 10 aufweist, wobei

a die Masse des gequollenen Polyphosphazens und
b die Masse des ungequollenen Polyphosphazens
sind.

**5.** Polyphosphazen gemäß einem der vorhergehenden Ansprüche, **dadurch gekennzeichnet, dass** die in den Schritten a) und b) eingesetzte Base ausgewählt ist aus 1,8-Diazabicyclo[5.4.0]undec-7-en und Pyridin.

**6.** Polyphosphazen gemäß einem der vorhergehenden Ansprüche, **dadurch gekennzeichnet, dass** das Polyphosphazen eine Glasübergangstemperatur ermittelt über dynamische Differenzkalorimetrie von 50 bis 70 °C aufweist.

**7.** Polyphosphazen gemäß einem der vorhergehenden Ansprüche, **dadurch gekennzeichnet, dass** als Bis-Hydroxy-terminierte Phosphonat eine Verbindung gemäß Formel (3) eingesetzt wird

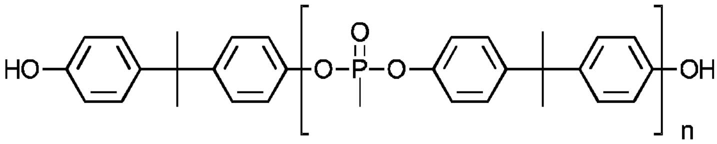

(3)

wobei n für eine natürliche Zahl zwischen 4 und 6 steht.

**8.** Formmasse enthaltend ein thermoplastisches Polymer und ein Polyphosphazen gemäß einem der vorhergehenden Ansprüche.

**9.** Formmasse gemäß Anspruch 8, **dadurch gekennzeichnet, dass** das thermoplastische Polymer ein Polyester, Polycarbonat, Vinyl(co)polymer, Polyamid oder Mischungen daraus ist.

**10.** Formmasse gemäß einem der Ansprüche 8 oder 9, **dadurch gekennzeichnet, dass** das Polyphosphazen in einem Anteil von 2 bis 20 Gew.-% enthalten ist.

**11.** Formkörper enthaltend eine Formmasse gemäß einem der Ansprüche 8-10.

**12.** Verfahren zur Herstellung eines Polyphosphazens umfassend
die Umsetzung von einem cyclisches Phosphazen gemäß Formel (1)

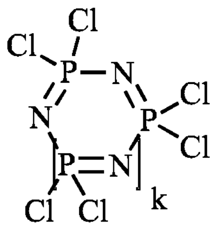

(1)

wobei k eine natürliche Zahl zwischen 1 und 10 ist

mit einem Bis-Hydroxy-terminierten Phosphonat gemäß Formel (2)

$$HO\text{-}R^2\text{-}[O\text{-}P(O)(R^1)\text{-}O\text{-}R^2]_n\text{-}OH \qquad (2)$$

wobei $R^1$ für $C_1$- bis $C_{20}$-Alkyl, $C_2$-$C_{20}$ Alkylen, $C_3$-$C_{20}$ Cycloalkyl oder $C_6$-$C_{20}$ Aryl steht $R^2$ für $C_1$- bis $C_{20}$-Alkyl,

Phenyl oder ein Bisphenyl steht
und n für 1-10 steht,
in Anwesenheit einer Base

**13.** Verfahren gemäß Anspruch 12, **dadurch gekennzeichnet, dass** als Bis-Hydroxy-terminierte Phosphonat eine Verbindung gemäß Formel (3) eingesetzt wird

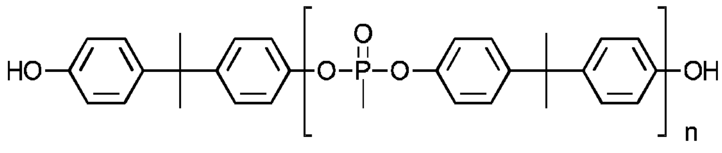
(3)

wobei n für eine natürliche Zahl zwischen 4 und 6 steht.

**14.** Verfahren gemäß einem der Ansprüche 12 oder 13, **dadurch gekennzeichnet, dass** die Umsetzung bei einer Temperatur zwischen 20 und 80 °C durchgeführt wird.

**15.** Verfahren gemäß einem der Ansprüche 12 bis 14, **dadurch gekennzeichnet, dass** nach der Umsetzung weiterhin ein Aufreinigungsschritt ausgewählt aus Filtration und Extraktion erfolgt.

## Claims

**1.** Polyphosphazene produced by reaction of a cyclic phosphazene of formula (1)

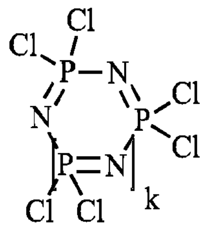
(1)

wherein k is a natural number between 1 and 10 with a bis-hydroxy-terminated phosphonate of formula (2)

$$HO\text{-}R^2\text{-}\ [O\text{-}P(O)(R^1)\text{-}O\text{-}R^2]_n\text{-}OH \qquad (2)$$

wherein $R^1$ represents $C_1$- to $C_{20}$-alkyl, $C_2$-$C_{20}$ alkylene, $C_5$-$C_{20}$ cycloalkyl or $C_6$-$C_{20}$ aryl, $R^2$ represents $C_1$- to $C_{20}$-alkyl, phenyl or a bisphenyl
and n represents 1-10,
in the presence of a base.

**2.** Polyphosphazene according to Claim 1, **characterized in that** the molar ratio of the bis-hydroxy-terminated phosphonate of formula (2) to the cyclic phosphazene of formula (1) is in the range from 2:1 to 4:1.

**3.** Polyphosphazene according to any of the preceding claims, **characterized in that** the polyphosphazene has a phosphorus content of 12% to 20% by weight.

**4.** Polyphosphazene according to Claim 1, **characterized in that** the phosphazene has a swelling factor $Q = \frac{a-b}{b}$ of 0.5 to 10 after storage for 3 days in chloroform,
where

a is the mass of the swollen polyphosphazene and
b is the mass of the unswollen polyphosphazene.

**5.** Polyphosphazene according to any of the preceding claims, **characterized in that** the base employed in steps a) and b) is selected from 1,8-diazabicyclo[5.4.0]undec-7-ene and pyridine.

**6.** Polyphosphazene according to any of the preceding claims, **characterized in that** the polyphosphazene has a glass transition temperature determined by differential scanning calorimetry of 50°C to 70°C.

**7.** Polyphosphazene according to any of the preceding claims, **characterized in that** the employed bis-hydroxy-terminated phosphonate is a compound of formula (3)

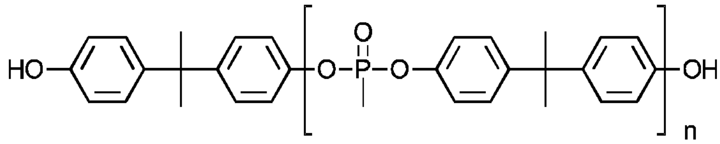
(3)

wherein n is a natural number between 4 and 6.

**8.** Moulding compound comprising a thermoplastic polymer and a polyphosphazene according to any of the preceding claims.

**9.** Moulding compound according to Claim 8, **characterized in that** the thermoplastic polymer is a polyester, polycarbonate, vinyl (co)polymer, polyamide or mixtures thereof.

**10.** Moulding compound according to either of Claims 8 and 9, **characterized in that** the polyphosphazene is present in a proportion of 2% to 20% by weight.

**11.** Moulded article comprising a moulding compound according to any of Claims 8-10.

**12.** Process for producing a polyphosphazene comprising reacting a cyclic phosphazene of formula (1)

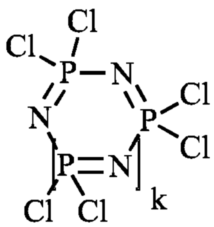
(1)

wherein k is a natural number between 1 and 10 with a bis-hydroxy-terminated phosphonate of formula (2)

$$HO\text{-}R^2\text{-}[O\text{-}P(O)(R^1)\text{-}O\text{-}R^2]_n\text{-}OH \qquad (2)$$

wherein $R^1$ represents $C_1$- to $C_{20}$-alkyl, $C_2$-$C_{20}$ alkylene, $C_5$-$C_{20}$ cycloalkyl or $C_6$-$C_{20}$ aryl
$R^2$ represents $C_1$- to $C_{20}$-alkyl, phenyl or a bisphenyl and n represents 1-10,
in the presence of a base.

**13.** Process according to Claim 12, **characterized in that** the employed bis-hydroxy-terminated phosphonate is a compound of formula (3)

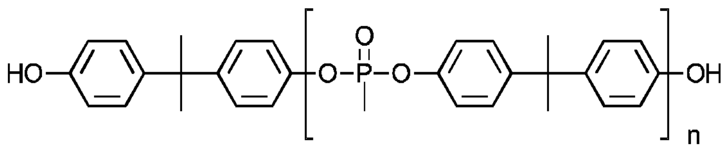
(3)

wherein n is a natural number between 4 and 6.

**14.** Process according to either of Claims 12 and 13, **characterized in that** the reaction is performed at a temperature between 20°C and 80°C.

**15.** Process according to any of Claims 12 to 14, **characterized in that** the reaction is followed by a purification step selected from filtration and extraction.

**Revendications**

**1.** Polyphosphazène préparé par transformation d'un phosphazène cyclique selon la formule (1)

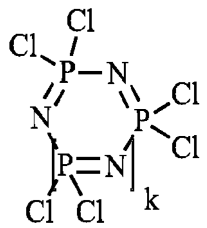
(1)

dans laquelle k représente un nombre naturel entre 1 et 10
avec un phosphonate terminé par bis-hydroxy selon la formule (2)

$$HO\text{-}R^2\text{-}[O\text{-}P(O)(R^1)\text{-}O\text{-}R^2]_n\text{-}OH \qquad (2)$$

dans laquelle $R^1$ représente $C_1$-$C_{20}$-alkyle, $C_2$-$C_{20}$-alkylène, $C_5$-$C_{20}$-cycloalkyle ou $C_6$-$C_{20}$-aryle, $R^2$ représente $C_1$-$C_{20}$-alkyle, phényle ou bisphényle
et n représente 1-10,
en présence d'une base.

**2.** Polyphosphazène selon la revendication 1, **caractérisé en ce que** le rapport molaire entre le phosphonate terminé par bis-hydroxy selon la formule (2) et le phosphazène cyclique selon la formule (1) se situe dans la plage de 2:1 à 4:1.

**3.** Polyphosphazène selon l'une des revendications précédentes, **caractérisé en ce que** le polyphosphazène présente une teneur en phosphore de 12 à 20% en poids.

**4.** Polyphosphazène selon la revendication 1, **caractérisé en ce que** le phosphazène présente un degré de gonflement $Q = \frac{a-b}{b}$ après un entreposage pendant 3 jours dans du chloroforme, de 0,5 à 10, où

a représente la masse du polyphosphazène gonflé et
b représente la masse du polyphosphazène non gonflé.

**5.** Polyphosphazène selon l'une des revendications précédentes, **caractérisé en ce que** la base utilisée dans les étapes a) et b) est choisie parmi le 1,8-diazabicyclo[5.4.0]undéc-7-ène et la pyridine.

**6.** Polyphosphazène selon l'une des revendications précédentes, **caractérisé en ce que** le polyphosphazène présente une température de transition vitreuse, déterminée par calorimétrie différentielle dynamique, de 50 à 70°C.

**7.** Polyphosphazène selon l'une des revendications précédentes, **caractérisé en ce qu'**on utilise, comme phosphonate terminé par bis-hydroxy, un composé selon la formule (3)

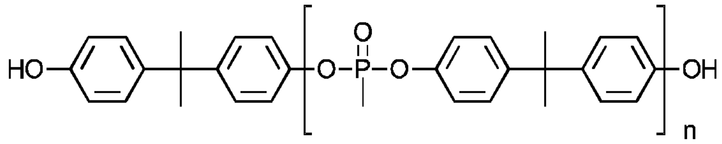

(3)

dans laquelle n représente un nombre naturel entre 4 et 6.

**8.** Masse de moulage contenant un polymère thermoplastique et un polyphosphazène selon l'une des revendications précédentes.

**9.** Masse de moulage selon la revendication 8, **caractérisée en ce que** le polymère thermoplastique est un polyester, un polycarbonate, un (co)polymère de vinyle, un polyamide ou des mélanges de ceux-ci.

**10.** Masse de moulage selon l'une des revendications 8 ou 9, **caractérisée en ce que** le polyphosphazène est contenu en une proportion de 2 à 20% en poids.

**11.** Corps moulé, contenant une masse de moulage selon l'une des revendications 8 à 10.

**12.** Procédé de préparation d'un polyphosphazène, comprenant

la transformation d'un phosphazène cyclique selon la formule (1)

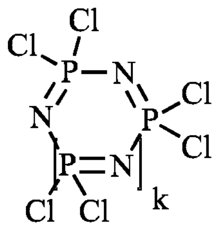

(1)

dans laquelle k représente un nombre naturel entre 1 et 10
avec un phosphonate terminé par bis-hydroxy selon la formule (2)

$$HO\text{-}R^2\text{-}[O\text{-}P(O)(R^1)\text{-}O\text{-}R^2]_n\text{-}OH \qquad (2)$$

dans laquelle $R^1$ représente $C_1$-$C_{20}$-alkyle, $C_2$-$C_{20}$-alkylène, $C_5$-$C_{20}$-cycloalkyle ou $C_6$-$C_{20}$-aryle
$R^2$ représente $C_1$-$C_{20}$-alkyle, phényle ou bisphényle et n représente 1-10,
en présence d'une base.

**13.** Procédé selon la revendication 12, **caractérisé en ce qu'**on utilise, comme phosphonate terminé par bis-hydroxy, un composé selon la formule (3)

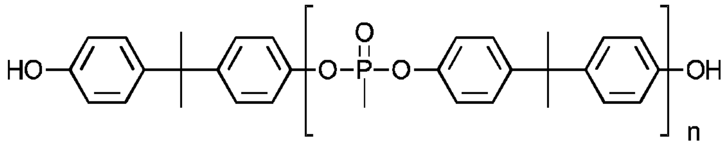

(3)

dans laquelle n représente un nombre naturel entre 4 et 6.

**14.** Procédé selon l'une des revendications 12 ou 13, **caractérisé en ce que** la transformation est réalisée à une température entre 20 et 80°C.

**15.** Procédé selon l'une des revendications 12 à 14, **caractérisé en ce qu'**après la transformation, une étape de purification choisie parmi la filtration et l'extraction a en outre lieu.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2014018672 A1
- WO 2013175448 A1
- JP 2002302598 A
- US 20120301766 A1
- EP 1444297 A1
- DE 2348950 A1
- US 20040039134 A1
- EP 1104766 A1
- US 6596893 B2
- CN 1026755591 A
- WO 2021042654 A
- US 20120172500 A1
- US 20140018471 A1
- US 8563638 B2
- DE 1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2407674 A
- DE 2407776 A
- DE 2715932 A
- DE 1900270 A
- US 3692744 A
- DE 2940024 A
- DE 3007934 A
- DE 2035390 A
- US 3644574 A
- DE 2248242 A
- GB 1409275 A
- EP 1104766 B1
- CN 102675591 A
- WO 2021043654 A1


### In der Beschreibung aufgeführte Nicht-Patentliteratur


- Herstellung aromatischer Polycarbonate. **SCHNELL**. Chemistry and Physics of Polycarbonates. Interscience Publishers, 1964
- Kunststoff-Handbuch. Carl-Hanser-Verlag, 1973, vol. VIII, 695
- **W. SCHOLTAN** ; **H. LANGE**. *Kolloid, Z. und Z. Polymere*, 1972, vol. 250, 782-1796
- **ULLMANNS**. Enzyklopädie der Technischen Chemie. 1980, vol. 19, 280